# EUROPEAN PATENT SPECIFICATION

(11) **EP 4 370 465 B1**
(45) Date of publication and mention of the grant of the patent: **02.07.2025**
(21) Application number: 22735928.8
(22) Date of filing: 05.07.2022
(51) Int. Cl.: B66C 1/10, B66C 23/18, F03D 13/10

(54) **PILE HOLDER, VESSEL AND PILE INSTALLATION METHOD**
PFAHLHALTER, SCHIFF UND PFAHLINSTALLATIONSVERFAHREN
DISPOSITIF DE RETENUE DE PIEU, NAVIRE ET PROCÉDÉ D'INSTALLATION DE PIEU

(30) Priority: 15.07.2021 NL 2028729
(43) Date of publication of application: 22.05.2024
(73) Proprietor: Itrec B.V., 3115 HH Schiedam (NL)
(72) Inventor: VEHMEIJER, Dhr. Terence Willem August, 3115 HH SCHIEDAM (NL)
(74) Representative: EP&C
(86) International application number: PCT/EP2022/068513
(87) International publication number: WO 2023/285199

(56) References cited:
- WO-A1-2018/117846
- WO-A1-2021/058544

## Description

The invention relates to a pile holder to be mounted on a vessel for installation of a pile adapted to support an offshore wind turbine, which pile holder is configured to support the pile in an upright position at a pile installation location outside a contour of the vessel. The invention further relates to a vessel comprising such a pile holder and a pile installation method in which use is made of such a vessel and/or pile holder.

Installation of an offshore wind turbine comprises the step of installing a pile of the offshore wind turbine. The pile is installed by driving the pile into the sea bottom after which the upper part of the wind turbine is installed on top of the pile. In known methods the pile is transported to the installation location on board a vessel. Once the vessel has arrived at the pile installation location the pile is set up at the pile installation location for driving. During driving the pile is supported by a pile holder on the vessel. It is intended not to damage the pile, in particular the coated surface of the pile, during installation thereof.

Commonly known and commercially available pile holders have a pile holder structure to be mounted on the vessel, and a plurality of pile engaging devices supported by the pile holder structure. Such pile holders with pile engaging devices are e.g. disclosed in WO2019172752, WO2021058544 and WO218117846 of the same applicant; the last one disclosing the preamble of claim 1. These pile engaging devices each comprise a horizontal roller shaft with an associated roller to allow for longitudinal movement of the pile, for engaging and supporting the pile. The pile holder allows a radial movement of the rollers towards and away from the pile.

The aim of the present invention is to provide an improved pile holder, further attributing to the prevention of damage of a pile.

The aim is achieved according to the present invention in that the roller is tangentially movably supported in the respective pile engaging device along the roller shaft, allowing a tangential sideways displacement of the roller. This active and/ or passive moveability of the rollers allows rotation of the pile, e.g. due to (unexpected) yaw motions, weathervaning and monopile orientation, and avoids pile and roller damage during such rotation.

Hence, in addition to the radial mobility of the rollers towards and away from the pile, the inventive pile holder also allows tangential mobility of the rollers following along the circumference of the pile, at a tangent from the radial direction.

The invention is based on the insight that in addition to the driving forces onto the pile, the pile in the pile holder may be subjected to yaw motions, i.e. rotation about a vertical axis, e.g. caused by yaw motions of the vessel relative to the pile, weathervaning and monopile orientation. It is noted that 'vertical' is substantially vertical, as both the ship and the pile are subjected to weather and sea-induced motions. Such rotation about a vertical axis results in tangential forces onto the pile. Mobility of the rollers in this tangential direction attributes to compensation of these forces.

In embodiments, the rollers are supported tangentially movable in a floating mode, such hat the roller is able to passively compensate for (unexpected) yaw motions. It is also conceivable and according to the present invention that the rollers are actively tangentially movable, e.g. via cylinders.

In embodiments, the movable rollers enable a rotation of the pile about its vertical axis of up to 10°, preferably 4,5-9°, dependent on the monopile diameter. For example, the diameter of a roller may be up to 1000mm, and the tangential stroke 600mm. The weight of such an exemplary roller may be up to 5500kg.

According to the invention, the pile holder allows a radial movement of the rollers towards and away from the pile. This can e.g. be achieved in that:
- the pile holder structure is radially movable with respect to the vessel, e.g. via hydraulic cylinders. For example, the pile holder structure is formed by two arms; and/ or in that
- a pile engaging device is radially movable with respect to pile holder structure, e.g. pile engaging device mounted pivotably to the pile holder structure about horizontal pivot axis; and/ or in that
- the roller shaft is radially movable with respect to pile engaging device, e.g. via hydraulic actuator.

The pile is to be radially supported by the rollers. The rollers are advantageously oriented in a circle, spaced along the circumference of the pile, to support the pile. Alternatively, the rollers do not define a full circle but only a part thereof.

An advantage of the pile being engaged and supported by radially movable rollers is that the pile holder is enabled to follow changes in the diameter of a pile being lowered while the rollers engage the outer surface of the pile.

The roller of the invention can have a cylindrical shape. In embodiments, the roller has a diabolo shape, i.e. double-coned, engaging the pile at a central recessed portion thereof. It is also conceivable that a pile is engaged by a roller at two contact points thereof.

Alternative pile holder structures as known in the art are also suitable to be used in combination with a pile engaging device with a tangentially movable roller according to the present invention.

In embodiments, a pile engaging device comprises two parallel roller shafts at a vertical distance from each other, each with an associated roller for engaging the pile. Such an assembly is sometimes referred to as a rollerbox assembly. In embodiments, the parallel roller shafts are commonly supported by a bogie which is movable along a horizontal bogie shaft.

In embodiments, a pile engaging device comprises a guide roller shaft with an associated guide roller, the guide roller shaft being parallel to the roller shaft and at a vertical distance from the roller shaft. Preferably, an upper and a lower guide roller are provide. Such guide rollers are not provided to support the pile, but to assist in the alignment and engagement of the rollers for supporting the pile in a vertical orientation.

In embodiments, a roller carrier is provided which is supported by the roller shaft, the roller carrier supporting the roller and allowing a rotation of the roller about a vertical axis with respect to the roller carrier. Such a roller carrier thus adds a degree of motion of the roller, which is advantageous during translation of the roller, to improve engagement of the roller with the pile. This is in particular advantageous when the roller has a diabolo shape (double-coned). It is noted that 'vertical' is substantially vertical, as both the ship and the pile are subjected to weather and sea-induced motions.

A correct orientation of the roller upon engagement with the pile may be assisted by guide rollers, provided parallel to the roller. Alternatively, a set of two rollers provided on a bogie will attribute to a correct orientation. Yet alternatively, a parallel linkage arm is provided.

In embodiments, a pile engaging device comprise one or more cylinders to tangentially displace the rollers. Such cylinders can be hydraulically actuated cylinders. The translation of the rollers is advantageously controlled by controlling such a hydraulic cylinder. In embodiments, the hydraulic cylinders can be set to a so-called floating mode. In a floating mode the roller passively compensates for yaw motions, e.g. yaw motions of the vessel relative to the pile.

In embodiments, the pile engaging device comprises an arm that is pivotably connected to the pile holder structure via a horizonal pivot axis, and wherein arm actuators are provided to adjust the radial distance between the roller and the pile holder structure.

Possibly, the arm extends in a substantially vertical direction, allowing the rollers to be at a vertical distance from the pile holder structure. Such a configuration saves space inside the pile holder structure, which is in particular advantageous for the handling of large diameter piles, such as piles having a diameter up to 13 meters or even more. It may also result in a less complex design of the pile holder. Preferably, only one roller is supported by a pile engaging device embodied as vertically orientated arm.

In embodiments, the pile holder structure comprises two elongated arms, of which one end is to be mounted on the vessel. For example to the stern, a side or the deck of the vessel. In embodiments, a base structure is mounted on the vessel, to which the pile holder structure is mounted. Advantageously, the base structure allows further movements of the pile holder structure, such a retraction within the contour of the vessel when not in use.

The pile holder structure according to the invention may in embodiments comprise:
- a base structure to be mounted on the vessel, e.g. the deck or a side of the vessel,
- a first and second jaw, pivotably connected at inner ends thereof to a part of the base structure to pivot about a yaw pivot axis between a closed position wherein the pile holder is configured to support the pile in an upright position at the pile installation location, and an open position, to allow the pile to be received in, or to be removed from, the pile holder in a lateral direction;
- wherein one or more pile engaging devices are movably supported by the base structure, the first jaw and/ or the second jaw.

In embodiments, the pile holder of the invention further comprising a control system, controlling both the radial movement of the rollers towards and away from the pile and the tangential sideways displacement of the roller.

In embodiments, each pile engaging device comprises an associated drive to move the rollers towards and away from the pile. The control system is preferably configured to individually control the drives of the pile engaging devices.

The present invention further relates to a vessel comprising a pile holder as described above.

The present invention further relates to a method for installation of a pile adapted to support an offshore wind turbine, wherein use is made of a pile holder as described above, and/ or of a vessel comprising a pile holder as described above.

The present invention further relates to a method for installation of a pile adapted to support an offshore wind turbine, wherein use is made of a pile holder configured to support the pile in an upright position at a pile installation location outside a contour of the vessel, the pile holder comprising a pile holder structure and a plurality of pile engaging devices supported by the pile holder structure, the pile engaging devices each comprising a horizontal roller shaft with an associated roller for engaging and supporting the pile, the method comprising the steps of:
- providing a vessel with a pile holding structure mounted on the vessel, and with the plurality of pile engaging devices outside a contour of the vessel;
- providing the pile between the pile engaging devices;
- radially moving the rollers towards the pile to engage and support the pile;
- tangentially displacing the rollers along the roller shaft.

The plurality of pile engaging devices may comprise two pile engaging devices. The pile is then provided between the two pile engaging devices. Alternatively, more pile engaging devices are provided, e.g. 5-10, provided in a circular arrangement. The pile is then provided within this circle, between the pile engaging devices.

In embodiments, one or more cylinders are provided to tangentially displace the rollers, and the cylinders are set to a floating mode once the rollers engage and support the pile. In such a floating mode the roller passively compensates for yaw, e.g. vessel yaw motions relative to the pile.

In embodiments, the radial movement of the rollers towards and away from the pile and the tangential sideways displacement of the roller are coordinated in that after the roller is moved tangentially to an end of the roller shaft, the roller is moved radially away from the pile and the roller is moved tangentially to the opposite end of the roller shaft and subsequently moved radially towards the pile, allowing a further rotation of the pile in the same rotation direction. This movement is also referred to as an 'hand-over-hand' movement, or 'inchworm' movement.

In addition to the yaw motions, the pile in the pile holder may be subjected to further motions, such as pitch and roll motions. In embodiments, the pile holder comprises a control system which control system is configured to provide active motion compensation in the horizontal plane while the pile holder supports the pile in the upright position at the installation location to compensate for movement of the vessel relative to the pile installation location.

In an embodiment, the pile holder further comprises a monitoring system that is configured to monitor the position and/or orientation of the pile while the pile is being loaded into the pile holder and/or while the pile holder supports the pile in the upright position at the pile installation location, and a control system that is configured to control movement pile holder.

The invention will be further elucidated in relation to the drawings, in which:
Fig. 1 is a perspective view of a vessel comprising the inventive pile holder;
Fig. 2 is a perspective view of a first embodiment of an inventive pile holder;
Figs. 3a and 3b are cross-sectional views of a second embodiment of the inventive pile holder;
Fig. 4 is a detailed cross-sectional view of part of the pile holder of figs. 3a and 3b;
Fig. 5 is a cross-sectional view of the second embodiment of the inventive pile holder, engaging a pile;
Fig. 6 is a cross-sectional view of the inventive pile holder of fig. 5;
Fig. 7a is a cross-sectional view of part of a third embodiment of the inventive pile holder;
Fig. 7b is an enlarged detail of the pile holder of fig. 7a;
Fig. 8 is a cross-sectional view of part of a fourth embodiment of the inventive pile holder;
Fig. 9a is a horizontal cross-sectional view of part of a fifth embodiment of the inventive pile holder;
Fig. 9b is a vertical cross-sectional view of part of a fifth embodiment of the inventive pile holder.

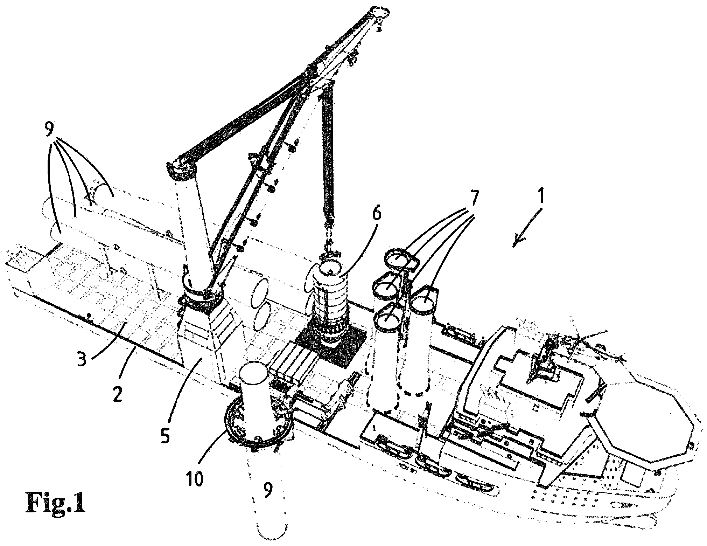

In fig. 1 a vessel 1 is shown, for installation of a pile 9 adapted to support an offhore wind turbine. A pile holder 10 is mounted to the vessel 1, and shown while handling a pile 9.

The vessel 1 includes a hull 2 with at least one deck 3. The deck 3 provides sufficient space to store, in this case, five piles 9 in a horizontal orientation. The piles 9 are preferably stored such that their longitudinal axes are parallel to a longitudinal axis of the vessel 1. The longitudinal axis of the vessel extending between a bow and an aft (i.e. stern) of the vessel.

In this embodiment, the vessel 1 is a monohull vessel, but alternatively, the vessel 1 could be a semi-submersible or a jack-up type vessel in which legs can be lowered into the water to lift the vessel at least partially out of the water so that waves have a limited or minimal effect on the vessel. The vessel can then e.g. be used in floating condition when the weather and wave conditions are good and can be used in jack-up condition when the weather and wave conditions are bad.

The pile holder 10 is here arranged at a side of the vessel, in this embodiment the starboard side of the vessel 1 to hold the pile 9 outside a contour of the vessel 1 at the starboard side. Alternatively, the pile holder 10 may be arranged at a stern or at the portside of the vessel to hold a pile 9 outside the contour of the vessel at a stern side or the portside of the vessel.

In this embodiment, a crane 5 is arranged next to the pile holder 10. The crane 5 is configured to handle a pile 9, wherein handling may include lifting a pile 9 from its storage location, upending the pile 9, positioning the pile 9 relative to the pile holder 10, and lowering the pile 9 to the sea floor. However, the crane 5 may also be configured to handle a pile driving mechanism 6, which pile driving mechanism 6 is configured to actively drive the pile 9 deeper into the sea bottom by applying downwardly directed forces to an upper end portion of the pile 9.

In an embodiment, when the pile 9 is lowered into the water, the pile 9 is initially held by the crane 5 and gravity force will initially drive the pile 9 into the sea bottom when the pile 9 reaches the sea bottom. When lowering based on gravity stops, the crane 5 can be disengaged from the pile 9 and the pile driving mechanism 6 can be lifted from its storage position to be positioned on top of the pile 9 to drive the pile 9 deeper into the sea bottom. It is noted here that the sea bottom may alternatively be referred to as the sea floor.

The storage location of the pile driving mechanism 6 is at the port side of the vessel in this embodiment to serve as a counterweight during handling of a pile 9 by the crane 5 outside the contour of the vessel.

In case the pile holder and crane are arranged at the stern of the vessel, it is preferred that the crane is arranged in line with a centre of gravity of the vessel and the pile holder is arranged next to the crane. In such a case, it is preferred that the storage location for the pile driving mechanism is at a side of the crane opposite to the side where the pile holding system is arranged.

The vessel 1 may also comprise deck space to store other equipment, e.g. pile extensions 7 that are configured to be connected to a free upper end of a pile 9 and that are configured to support a mast of an offshore wind turbine.

In Fig. 1, the pile holder 10 holds the pile 9 in an upright position at a pile installation location next to the vessel 1, i.e. outside the contour of the vessel. In Fig. 1, the pile has passively penetrated the sea bottom due to gravity and the crane 5 is in the process of lifting the pile driving mechanism 6 in order to position the pile driving mechanism 6 on the pile 9 for actively driving the pile 9 further into the sea bottom. Alternative driving mechanisms are well known in the art. Although the pile 9 is not held anymore by the crane 5, the pile holder 10 still limits movement of the pile 9.

The pile holder 10 of fig. 1 comprises a pile holder structure mounted on the vessel and a plurality of pile engaging devices.

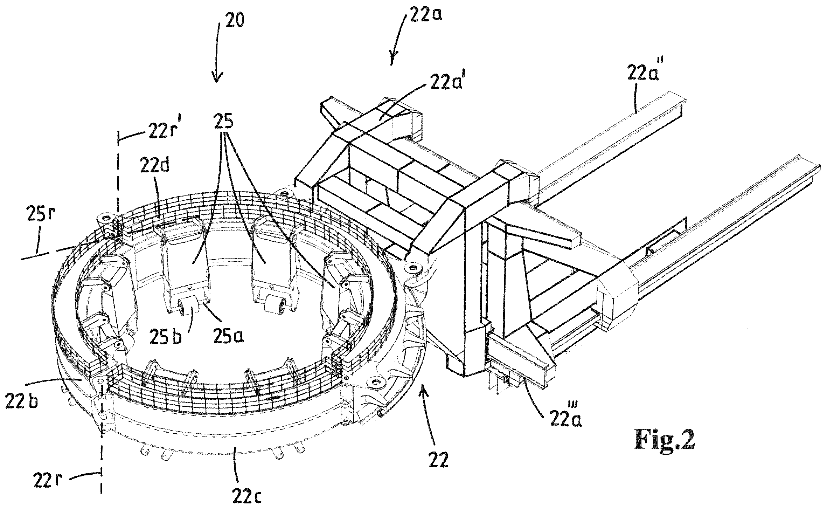

In fig. 2, a first embodiment view of a first embodiment of an inventive pile holder 20 is shown in detail.

The pile holder 20 comprises a pile holder structure 22 to be mounted on the vessel, and a plurality of pile engaging devices 25 supported by the pile holder structure 22.

The pile holder structure 22 of the shown embodiment comprises a base structure 22a, to be mounted on the vessel, e.g. the deck or a side of the vessel. Here, the base structure 22a comprises a carriage 22a' , a sets of rails 22a", and a rail 22a"', along which the carriage 22a' is movable. This construction of the base structure 22a allows he pile holder structure to move in a XY direction.

In an alternative embodiment, not shown, the pile holder structure comprises two elongated arms, of which one end is to be mounted on the vessel.

The pile holder structure 20 further comprises three interconnected jaws 22b, 22c, 22d, connected to a part of the base structure 22a to pivot about a yaw pivot axes 22r'. The axis denoted with reference numeral 22r refers to the latch mechanism between the yaw. In fig. 2 the pile holder is in a closed position wherein the pile holder is configured to support the pile in an upright position at the pile installation location. The pile holder is movable to an open position, to allow the pile to be received in, or to be removed from, the pile holder in a lateral direction. In the shown configuration the jaws 22b, 22c, 22d are interconnected to support the pile.

The pile holder structure comprises eight pile engaging devices 25, supported by the pile holder structure 22, here by the interconnected jaws 22b, 22c, 22d. The pile engaging devices each comprise a horizontal roller shaft 25a with an associated roller 25b for engaging and supporting a pile.

According to the invention, the pile holder allows a radial movement of the rollers towards and away from the pile. In the embodiment of fig. 2, the rollers 22b are radially movable as each of the pile engaging devices 25 is supported pivotable by the pile holder structure 22, about pivot axis 25r. This radial movement allows the pile holder to engage and support piles of distinct diameters, and/ or piles with a diameter varying along its length.

The rollers 25b are tangentially movably supported in the respective pile engaging device 25 along the roller shaft 25a, allowing a tangential sideways displacement of the roller. This follows in fig. 2 from the length of the roller shaft 25a, being almost twice as long as the length of the rollers, and hence allowing a sideways movement of the rollers.

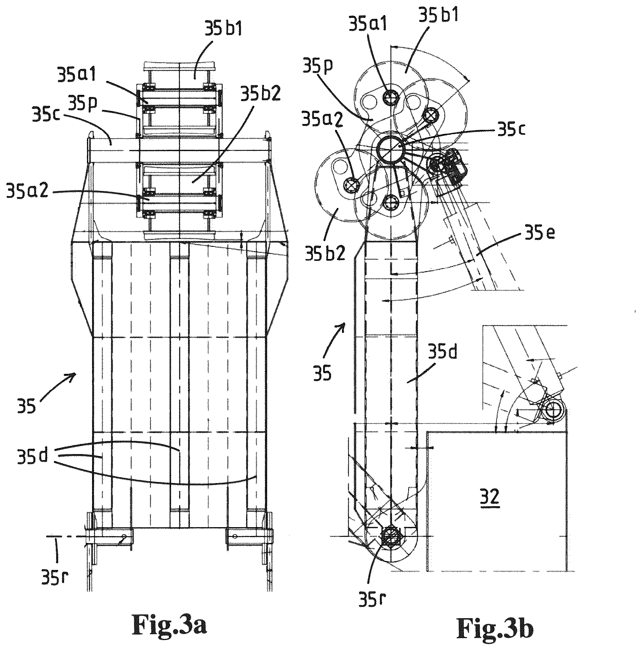

In figs. 3a-6, details of a second embodiment of the inventive pile holder 30 are depicted. Only part of a pile holder structure 32 is visible, adapted to be mounted on a vessel.

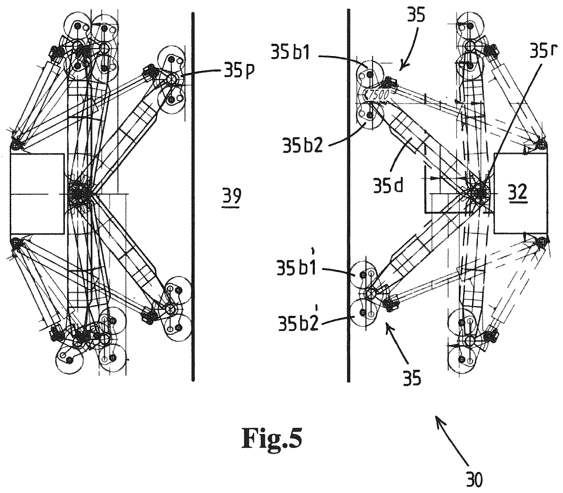

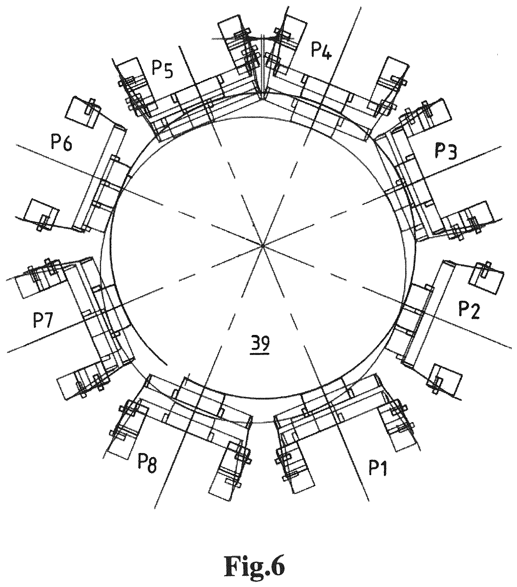

From the side view of fig. 5, in combination with the cross-sectional view of fig. 6 follows that a total of eight upper and eight lower pile engaging devices 35 are supported by the pile holder structure 32.

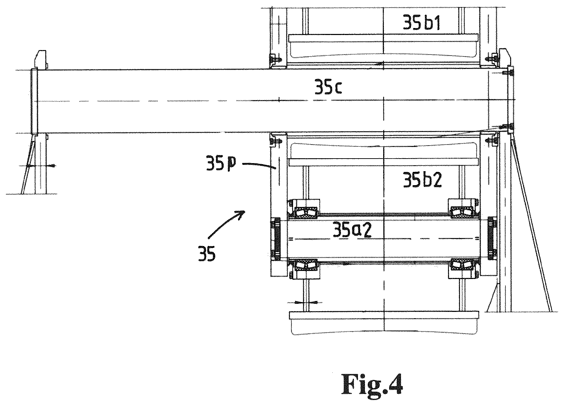

In figures 3a, 3b and 4 the pile engaging device 35 is shown in more detail. The pile engaging device 35 of this embodiment comprises two parallel horizontal roller shafts 35a1, 35a2 at a vertical distance from each other, each with an associated roller 35b1, 35b2 for engaging the pile. The horizontal roller shafts 35a1, 35a2 are commonly supported by bogie 35p which is movable along a horizontal bogie shaft 35c.

The horizontal roller shafts 35a1, 35a2 have a length that is about twice that of the associated rollers 35b1, 35b2. This allows the inventive tangential sideways movement of the roller along the roller shaft.

In figure 4 it is visible that the surface of the rollers is concave in a cross-sectional view. In other words, the rollers are preferably not perfectly cylindrical but have the shape of a diabolo, also referred to as a concave-faced cylinder.

The horizontal bogie shaft 35c of the pile engaging device 35 is supported via arms 35d, which is pivotably connected to the pile holder structure 32 via a horizontal pivot axis 35r. In addition, a hydraulic cylinder 35e is provided between the pile holder structure 32 and the horizontal bogie shaft 35c, which hydraulic cylinder 35e is an actuator for the arm 35d to adjust the radial distance between the rollers 35b1, 35b2 and the pile holder structure 35. This construction allows a radial movement of the rollers and allows the pile holder to engage and support piles of distinct diameters.

In figure 5 distinct positions of the pile engaging device 35 are shown: a position wherein the rollers (almost) engage a pile 39 and wherein the arms 35d include an angle of about 45° with the horizontal, and a position wherein the upper rollers 35b1, 35b2 and lower rollers 35b1', 35b2' are a vertical distance from the pile holder structure 32 and the arms 35d extend substantially vertically.

It is visible in fig. 5 that the upper rollers 35b1, 35b2 do not engage and support the pile 39, and lower rollers 35b1', 35b2' do engage and support the pile. According to the invention, it is possible to tangentially displace the rollers along the shaft, when not engaging the pile. The shown situation illustrates an exemplary method wherein the radial movement of the rollers towards and away from the pile and the tangential sideways displacement of the roller are coordinated. In the shown situation, upper rollers 35b1, 35b2 may have moved tangentially to an end of the roller shaft, and in fig. 5 are the rollers 35b1, 35b2 moved radially away from the pile 39, allowing the rollers 35b1, 35b2 to move tangentially to the opposite end of the roller shaft and subsequently move radially back towards the pile 39, allowing yet a further rotation of the pile in the same rotation direction.

In the top view of fig. 6, centrally pile 39 is shown, surrounded by eight pile engaging devices at locations P1-P8. In fig. 6, two positions of the pile 39 are shown, wherein in both positions the pile 39 is engaged and supported by the eight pile engaging devices.

In a first position, all rollers of the pile engaging devices are situated centrally on their roller shaft.

In the second position, the rollers at positions P1, P3, P4, P5, P7 and P8 moved radially to keep support the pile 39 at the second position. The rollers at P6 and P2 maintained their radial position, while the rollers at P3, P4 and P5 moved away from a not-shown pile holder structure, further in the direction of the first position of the pile, and the rollers at P7, P8 and P1 moved towards the not-shown pile holder structure and further away from the first position of the pile.

In the second position, further, the rollers at positions P1, P2, P3, P5, P6 and P7 moved tangentially along the respective roller shaft. The rollers at positions P4 and P8 maintained their tangential position. The rollers at positions P1, P2 and P3 moved to the left, when seen from above, and the rollers at positions P5, P6 and P7 moved to the right, to keep engaging and supporting the pile 39.

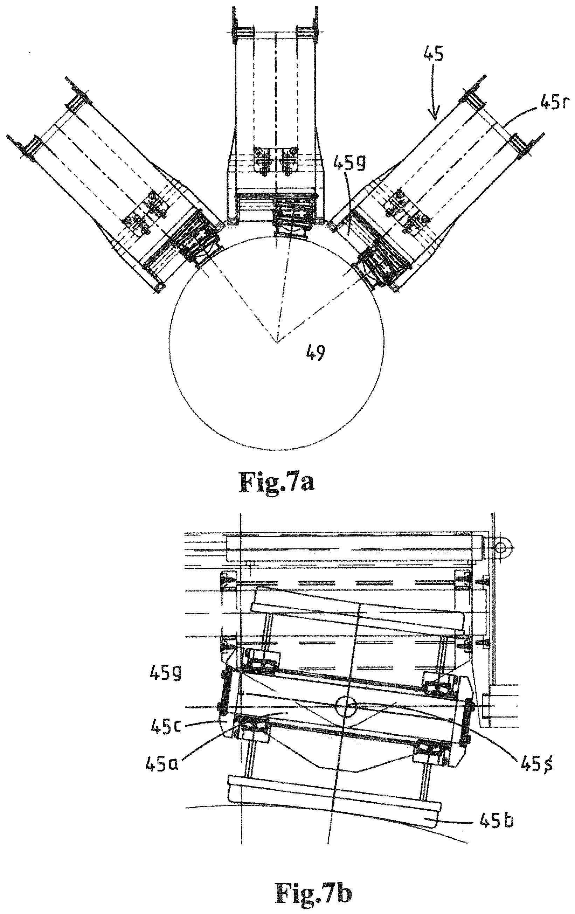

In Figs. 7a and 7b a pile engaging devices 45 of a third embodiment of the inventive pile holder are shown. The pile holder structure of the third embodiment of the inventive pile holder is not shown. One end of the pile engaging device 45 is supported by a not-shown pile holder structure via a pivot axis 45r. At the opposite end the pile engaging device 45 comprises a horizontal carrier shaft 45g.

In this third embodiment, a roller carrier 45c is provided which is supported by the carrier shaft 45g, the roller carrier 45c supporting the roller 45b and allowing a rotation of the roller about a substantially vertical axis 45s with respect to the carrier shaft 45g. The roller carrier 45c carries roller shaft 45a of roller 45b. This rotation about vertical axis 45s attributes to engaging and supporting a pile 49.

Similar to the first and second embodiment, pivot axis 45r allows a radial movement of the roller 45b towards and away from the pile.

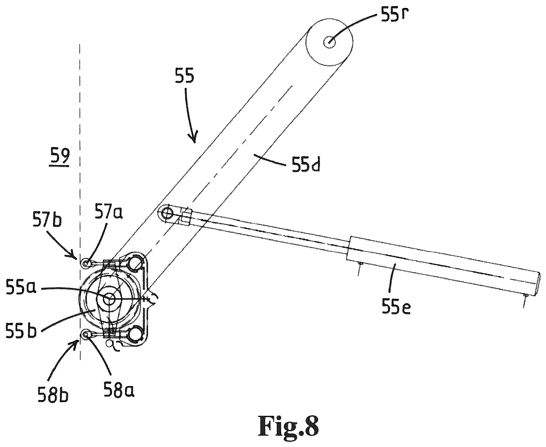

In fig. 8 pile engaging device 55 of a fourth embodiment of the inventive pile holder is shown. The pile engaging device is adapted to be supported by a pile holder structure via a pivot axis 55r. The pile engaging device 55 comprises a horizontal shaft 55a for a roller 55b.

In addition, the pile engaging device of this fourth embodiment comprises two guide roller shafts 57a, 58a with associated guide rollers 57b, 58b. The guide roller shafts 57a, 58a are parallel to the roller shaft 55a and at a vertical distance from the roller shaft. The guide rollers do not support a pile 59, but are provided to guide the roller 55b and ensure a support of the pile in a (substantially) vertical orientation.

Similar to the first embodiment, the horizontal shaft 55a of the pile engaging device 55 is supported via an arm 55d, which is pivotably connected to a not-shown pile holder structure via a horizontal pivot axis 55r. A hydraulic cylinder 55e is provided between the not-shown pile holder structure and the arm 55d, which hydraulic cylinder 55e is an actuator for the arm 55d to adjust the radial distance between the roller 55b and the pile holder structure. This construction allows a radial movement of the rollers and allows the pile holder to engage and support piles of distinct diameters.

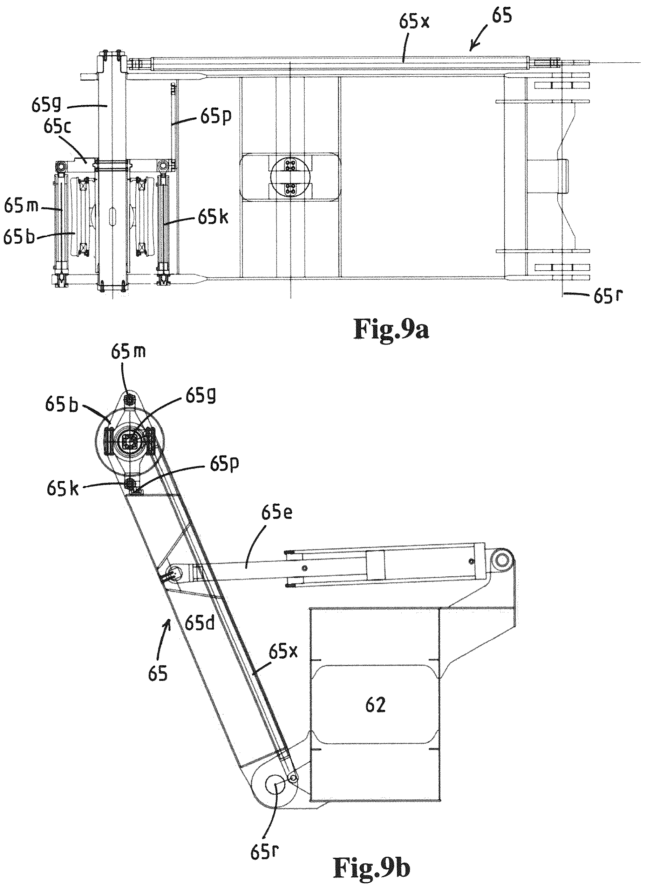

In Figs. 9a and 9b a pile engaging devices 65 of a fifth embodiment of the inventive pile holder are shown. A pile holder structure 62 of the fifth embodiment of the inventive pile holder is shown in fig. 9b. The pile engaging device 65 is supported at one end by the pile holder structure 62 via a pivot axis 65r. At the opposite end the pile engaging device 65 comprises a horizontal carrier shaft 65g.

In this fifth embodiment, a roller frame 65c is provided which is supported by roller shaft 65g of roller 65b. Here, the pile engaging device 65 comprises two cylinders 65k, 65m to tangentially displace the roller frame 65c with roller 65b. A rail 65p is provided to guide this tangential displacement, and maintain the relative orientation of the cylinders 65k, 65m with respect to the roller shaft 65g.

Similar to the first and second embodiment, pivot axis 65r allows a radial movement of the roller 65b towards and away from the pile.

Similar to the first embodiment, the horizontal roller shaft 65g of the pile engaging device 65 is supported via an arm 65d, which is pivotably connected to pile holder structure 62 via a horizontal pivot axis 65r. A hydraulic cylinder 65e is provided between the pile holder structure 62 and the arm 65d, which hydraulic cylinder 65e is an actuator for the arm 65d to adjust the radial distance between the roller 65b and the pile holder structure. This construction allows a radial movement of the rollers and allows the pile holder to engage and support piles of distinct diameters, or piles having a variable diameter across its length.

In addition, the pile engaging device 65 of this fifth embodiment comprises a parallel linkage arm 65x, which is provided to position the roller 65b and ensure a support of the pile in a (substantially) vertical orientation.

## Claims

1. Pile holder (10, 20) to be mounted on a vessel (1) for installation of a pile (9) adapted to support an offshore wind turbine, which pile holder is configured to support the pile in an upright position at a pile installation location outside a contour of the vessel, the pile holder comprising:
- a pile holder structure (22) to be mounted on the vessel; and
- a plurality of pile engaging devices (25) supported by the pile holder structure, the pile engaging devices each comprising a horizontal roller shaft (25a) with an associated roller (25b) for engaging and supporting the pile;
wherein the pile holder allows a radial movement of the rollers towards and away from the pile; **characterized in that** the roller is tangentially movably supported in the respective pile engaging device along the roller shaft, allowing a tangential sideways displacement of the roller.

2. Pile holder according to claim 1, wherein a pile engaging device (35) comprises two parallel roller shafts (35a1; 35a2) at a vertical distance from each other, each with an associated roller (35b1; 35b2) for engaging the pile.

3. Pile holder according to claim 1 or 2, wherein a pile engaging device comprises a guide roller shaft (57a; 58a) with an associated guide roller (57b; 58b), the guide roller shaft being parallel to the roller shaft and at a vertical distance from the roller shaft.

4. Pile holder according to any of the preceding claims, wherein a roller carrier (45c) is provided which is supported by the roller shaft, the roller carrier supporting the roller and allowing a rotation of the roller about a vertical axis with respect to the roller carrier.

5. Pile holder according to any of the preceding claims, wherein a pile engaging device comprise one or more cylinders (65k, 65m) to tangentially displace the rollers.

6. Pile holder according to any of the preceding claims, wherein the pile engaging device comprises an arm (65d) that is pivotably connected to the pile holder structure (62) via a horizonal pivot axis (65r), and wherein arm actuators (65e) are provided to adjust the radial distance between the roller and the pile holder structure.

7. Pile holder according to claim 6, wherein the arm extends in a substantially vertical direction, allowing the rollers to be at a vertical distance from the pile holder structure.

8. Pile holder according to any of the preceding claims, further comprising a control system, controlling the radial movement of the rollers towards and away from the pile and the tangential sideways displacement of the roller.

9. Vessel comprising a pile holder according to one or more of the preceding claims 1-8.

10. Method for installation of a pile adapted to support an offshore wind turbine, wherein use is made of a pile holder according to any of the preceding claims 1-8 and or a vessel according to claim 9.

11. Method for installation of a pile adapted to support an offshore wind turbine, wherein use is made of a pile holder configured to support the pile in an upright position at a pile installation location outside a contour of the vessel, the pile holder comprising a pile holder structure and a plurality of pile engaging devices supported by the pile holder structure, the pile engaging devices each comprising a horizontal roller shaft with an associated roller for engaging and supporting the pile, a pile holder according to any of the preceding claims 1-8, the method comprising the steps of:
- providing a vessel with a pile holding structure mounted on the vessel, and with the plurality of pile engaging devices outside a contour of the vessel;
- providing the pile between the pile engaging devices;
- radially moving the rollers towards the pile to engage and support the pile;
- tangentially displacing the rollers along the roller shaft.

12. Method according to claim 11, wherein one or more cylinders are provided to tangentially displace the rollers, and wherein the cylinders are set to a floating mode once the rollers engage and support the pile.

13. Method according to claim 11 or 12, wherein the radial movement of the rollers towards and away from the pile and the tangential sideways displacement of the roller are coordinated in that after the roller is moved tangentially to an end of the roller shaft, the roller is moved radially away from the pile and the roller is moved tangentially to the opposite end of the roller shaft and subsequently moved radially towards the pile, allowing a further rotation of the pile in the same rotation direction.

## Patentansprüche

1. Pfahlhalter (10, 20) zur Montage an einem Schiff (1) zur Installation eines Pfahls (9), der dazu geeignet ist, eine Offshore-Windturbine zu stützen, wobei der Pfahlhalter dazu ausgelegt ist, den Pfahl in einer aufrechten Position an einer Pfahlinstallationsposition außerhalb einer Kontur des Schiffs zu stützen, wobei der Pfahlhalter Folgendes umfasst:
- eine Pfahlhalterstruktur (22) zur Montage an dem Schiff; und
- mehrere von der Pfahlhalterstruktur gestützte Pfahleingriffsvorrichtungen (25), wobei die Pfahleingriffsvorrichtungen jeweils eine horizontale Rollenwelle (25a) mit einer zugehörigen Rolle (25b) zum Eingreifen in und Stützen des Pfahls umfassen;
wobei der Pfahlhalter eine radiale Bewegung der Rollen zu dem Pfahl hin und von diesem weg ermöglicht; **dadurch gekennzeichnet, dass** die Rolle in der jeweiligen Pfahleingriffsvorrichtung entlang der Rollenwelle tangential beweglich gestützt ist, wodurch eine tangentiale seitliche Verschiebung der Rolle ermöglicht wird.

2. Pfahlhalter nach Anspruch 1, wobei eine Pfahleingriffsvorrichtung (35) zwei parallele Rollenwellen (35a1; 35a2) in einem vertikalen Abstand voneinander mit jeweils einer zugehörigen Rolle (35b1; 35b2) zum Eingreifen in den Pfahl umfasst.

3. Pfahlhalter nach Anspruch 1 oder 2, wobei eine Pfahleingriffsvorrichtung eine Führungsrollenwelle (57a; 58a) mit einer zugehörigen Führungsrolle (57b; 58b) umfasst, wobei die Führungsrollenwelle parallel zur Rollenwelle und in einem vertikalen Abstand von der Rollenwelle angeordnet ist.

4. Pfahlhalter nach einem der vorhergehenden Ansprüche, wobei ein Rollenträger (45c) vorgesehen ist, der von der Rollenwelle gestützt ist, wobei der Rollenträger die Rolle stützt und eine Drehung der Rolle um eine vertikale Achse in Bezug auf den Rollenträger ermöglicht.

5. Pfahlhalter nach einem der vorhergehenden Ansprüche, wobei eine Pfahleingriffsvorrichtung einen oder mehrere Zylinder (65k, 65m) zum tangentialen Verschieben der Rollen umfasst.

6. Pfahlhalter nach einem der vorhergehenden Ansprüche, wobei die Pfahleingriffsvorrichtung einen Arm (65d) umfasst, der über eine horizontale Schwenkachse (65r) schwenkbar mit der Pfahlhalterstruktur (62) verbunden ist, und wobei Armaktuatoren (65e) bereitgestellt sind, um den radialen Abstand zwischen der Rolle und der Pfahlhalterstruktur zu verstellen.

7. Pfahlhalter nach Anspruch 6, wobei sich der Arm in einer im Wesentlichen vertikalen Richtung erstreckt, wodurch ermöglicht wird, dass sich die Rollen in einem vertikalen Abstand von der Pfahlhalterstruktur befinden.

8. Pfahlhalter nach einem der vorhergehenden Ansprüche, der ferner ein Steuersystem umfasst, das die radiale Bewegung der Rollen zu dem Pfahl hin und von diesem weg und die tangentiale seitliche Verschiebung der Rolle steuert.

9. Schiff, das einen Pfahlhalter nach einem oder mehreren der vorhergehenden Ansprüche 1-8 umfasst.

10. Verfahren zum Installieren eines Pfahls, der dazu geeignet ist, eine Offshore-Windturbine zu stützen, wobei ein Pfahlhalter nach einem der vorhergehenden Ansprüche 1-8 und oder ein Schiff nach Anspruch 9 verwendet wird.

11. Verfahren zum Installieren eines Pfahls, der dazu geeignet ist, eine Offshore-Windturbine zu stützen, wobei ein Pfahlhalter verwendet wird, der dazu ausgelegt ist, den Pfahl in einer aufrechten Position an einer Pfahlinstallationsposition außerhalb einer Kontur des Schiffs zu stützen, wobei der Pfahlhalter eine Pfahlhalterstruktur und mehrere von der Pfahlhalterstruktur gestützte Pfahleingriffsvorrichtungen umfasst, wobei die Pfahleingriffsvorrichtungen jeweils eine horizontale Rollenwelle mit einer zugehörigen Rolle zum Eingreifen in und Stützen des Pfahls, einen Pfahlhalter nach einem der vorhergehenden Ansprüche 1-8, umfassen, wobei das Verfahren die folgenden Schritte umfasst:
- Bereitstellen eines Schiffes mit einer an dem Schiff montierten Pfahlhaltestruktur und mit den mehreren Pfahleingriffsvorrichtungen außerhalb einer Kontur des Schiffes;
- Bereitstellen des Pfahls zwischen den Pfahleingriffsvorrichtungen;
- radiales Bewegen der Rollen zu dem Pfahl hin, um den Pfahl in Eingriff zu bringen und zu stützen;
- tangentiales Verschieben der Rollen entlang der Rollenwelle.

12. Verfahren nach Anspruch 11, wobei ein oder mehrere Zylinder bereitgestellt werden, um die Rollen tangential zu verschieben, und wobei die Zylinder in einen Schwimmmodus versetzt werden, sobald die Rollen den Pfahl in Eingriff bringen und stützen.

13. Verfahren nach Anspruch 11 oder 12, wobei die radiale Bewegung der Rollen zu dem Pfahl hin und von diesem weg und die tangentiale seitliche Verschiebung der Rolle dadurch koordiniert werden, dass nach dem tangentialen Bewegen der Rolle zu einem Ende der Rollenwelle die Rolle radial von dem Pfahl weg bewegt wird und die Rolle tangential zu dem gegenüberliegenden Ende der Rollenwelle bewegt wird und anschließend radial zu dem Pfahl hin bewegt wird, wodurch eine weitere Drehung des Pfahls in derselben Drehrichtung ermöglicht wird.

## Revendications

1. Dispositif de retenue de pieu (10, 20) destiné à être monté sur un navire (1) pour l'installation d'un pieu (9) conçu pour supporter une éolienne en mer, lequel dispositif de retenue de pieu est conçu pour supporter le pieu en position verticale à un emplacement d'installation de pieu à l'extérieur de la périphérie du navire, le dispositif de retenue de pieu comprenant :
- une structure de dispositif de retenue de pieu (22) à monter sur le navire ; et
- une pluralité de dispositifs de mise en prise de pieu (25) supportés par la structure de dispositif de retenue de pieu, les dispositifs de mise en prise de pieu comprenant chacun un axe de rouleau horizontal (25a) doté d'un rouleau (25b) associé pour mettre en prise le pieu et le supporter ;
le dispositif de retenue de pieu permettant un mouvement radial des rouleaux vers et à l'opposé du pieu ; **caractérisé en ce que** le rouleau est supporté de manière tangentielle et mobile dans le dispositif de mise en prise de pieu respectif le long de l'axe de rouleau, permettant un déplacement latéral tangentiel du rouleau.

2. Dispositif de retenue de pieu selon la revendication 1, un dispositif de mise en prise de pieu (35) comprenant deux axes de rouleau (35a1 ; 35a2) parallèles espacés verticalement l'un de l'autre, chacun étant doté d'un rouleau (35b1 ; 35b2) associé pour mettre en prise le pieu.

3. Dispositif de retenue de pieu selon la revendication 1 ou 2, un dispositif de mise en prise de pieu comprenant un axe de rouleau de guidage (57a ; 58a) doté d'un rouleau de guidage (57b ; 58b) associé, l'axe de rouleau de guidage étant parallèle à l'axe de rouleau et à une distance verticale de l'axe de rouleau.

4. Dispositif de retenue de pieu selon l'une quelconque des revendications précédentes, un support de rouleau (45c) étant fourni qui est supporté par l'axe de rouleau, le support de rouleau supportant le rouleau et permettant une rotation du rouleau autour d'un axe vertical par rapport au support de rouleau.

5. Dispositif de retenue de pieu selon l'une quelconque des revendications précédentes, un dispositif de mise en prise de pieu comprenant un ou plusieurs cylindres (65k, 65m) pour déplacer tangentiellement les rouleaux.

6. Dispositif de retenue de pieu selon l'une quelconque des revendications précédentes, le dispositif de mise en prise de pieu comprenant un bras (65d) qui est relié de manière pivotante à la structure de dispositif de retenue de pieu (62) par l'intermédiaire d'un axe de pivotement horizontal (65r), et des actionneurs de bras (65e) étant fournis pour ajuster la distance radiale entre le rouleau et la structure de dispositif de retenue de pieu.

7. Dispositif de retenue de pieu selon la revendication 6, le bras s'étendant dans une direction sensiblement verticale, permettant aux rouleaux d'être à une distance verticale de la structure de dispositif de retenue de pieu.

8. Dispositif de retenue de pieu selon l'une quelconque des revendications précédentes, comprenant en outre un système de commande, commandant le mouvement radial des rouleaux vers et à l'opposé du pieu et le déplacement latéral tangentiel du rouleau.

9. Navire comprenant un dispositif de retenue de pieu selon une ou plusieurs des revendications précédentes 1 à 8.

10. Procédé d'installation d'un pieu conçu pour supporter une éolienne en mer, faisant utilisation d'un dispositif de retenue de pieu selon l'une quelconque des revendications précédentes 1-8 et/ou d'un navire selon la revendication 9.

11. Procédé d'installation d'un pieu conçu pour supporter une éolienne en mer, faisant utilisation d'un dispositif de retenue de pieu conçu pour supporter le pieu en position verticale à un emplacement d'installation de pieu à l'extérieur de la périphérie du navire, le dispositif de retenue de pieu comprenant une structure de dispositif de retenue de pieu et une pluralité de dispositifs de mise en prise de pieu supportés par la structure de dispositif de retenue de pieu, les dispositifs de mise en prise de pieu comprenant chacun un axe de rouleau horizontal doté d'un rouleau associé pour mettre en prise le pieu et le supporter, dispositif de retenue de pieu selon l'une quelconque des revendications précédentes 1 à 8, le procédé comprenant les étapes consistant à :
- fournir un navire doté d'une structure de retenue de pieu montée sur le navire, et d'une pluralité de dispositifs de mise en prise de pieu à l'extérieur de la périphérie du navire ;
- fournir le pieu entre les dispositifs de mise en prise de pieu ;
- déplacer radialement les rouleaux vers le pieu pour mettre en prise le pieu et le soutenir ;
- déplacer tangentiellement les rouleaux le long de l'axe de rouleau.

12. Procédé selon la revendication 11, un ou plusieurs cylindres étant fournis pour déplacer tangentiellement les rouleaux, et les cylindres étant réglés en un mode flottant une fois que les rouleaux mettent en prise le pieu et le supportent.

13. Procédé selon la revendication 11 ou 12, le mouvement radial des rouleaux vers et à l'opposé du pieu et le déplacement latéral tangentiel du rouleau étant coordonnés en ce qu'après que le rouleau est déplacé de manière tangentielle à une extrémité de l'axe de rouleau, le rouleau est déplacé radialement à l'opposé du pieu et le rouleau est déplacé tangentiellement à l'extrémité opposée de l'axe de rouleau et ultérieurement déplacé radialement vers le pieu, permettant une rotation supplémentaire du pieu dans le même sens de rotation.
